# EUROPEAN PATENT SPECIFICATION

(11) **EP 1 290 564 B1**
(45) Date of publication and mention of the grant of the patent: **03.05.2006**
(21) Application number: 01934708.7
(22) Date of filing: 04.05.2001
(51) Int. Cl.: G06F 13/00, H04L 29/08

(54) **PROCEDURE AT TRANSMISSION/TRANSFER OF DATA FILES**
PROZEDUR BEI DER ÜBERTRAGUNG BZW. BEIM TRANSFER VON DATENDATEIEN
PROCEDURE DE TRANSMISSION/TRANSFERT DE FICHIERS DE DONNEES

(30) Priority: 05.05.2000 SE 0001664
(43) Date of publication of application: 12.03.2003
(73) Proprietor: Telia AB (publ), 123 86 Farsta (SE)
(72) Inventor: BERGSTEN, Anders, SE-977 52 Lulea (SE); BORG, Niklas, SE-120 58 Arsta (SE); JOHANSSON, Joachim, S-977 52 Lulea (SE)
(74) Representative: Hopfgarten, Nils
(86) International application number: PCT/SE2001/000968
(87) International publication number: WO 2001/086452

(56) References cited:
- DATABASE WPI Week 199947, Derwent Publications Ltd., London, GB; AN 1999-556482, XP002943058 & JP 11 242 640 A (KOKUSAI DENSHIN DENWA CO LTD) 07 September 1999 & PATENT ABSTRACTS OF JAPAN & JP 11 242 640 A (KDD COEP)
- DATABASE WPI Week 199751, Derwent Publications Ltd., London, GB; AN 1997-557098, XP002943059 & JP 9 270 790 A (NTT DATA TSUSHIN KK) 14 October 1997 & PATENT ABSTRACTS OF JAPAN & JP 09 270 790 A (NTT DATA TSUSHIN KK)
- DATABASE WPI Week 200029, Derwent Publications Ltd., London, GB; AN 2000-334777, XP002943060 & JP 2000 105730 A (MEIDENSHA CORP) 11 April 2000
- DATABASE WPI Week 199935, Derwent Publications Ltd., London, GB; AN 1999-409208, XP002943061 & JP 11 161 538 A (HITACHI LTD) 18 June 1999 & PATENT ABSTRACTS OF JAPAN & JP 11 161 538 A (HITACHI LTD)

## Description

### Technical field

The present invention relates to a procedure at transmission/transfer of data files from transmitting units to receiving units, at which examples of the data files which shall be transmitted/transferred are stored in a plurality of transmitting units. The present invention also relates to a computer program including program steps for performing the steps in a procedure according to the invention, to one by a computer readable medium including instructions for performing the steps in a procedure according to the invention and to a data packet at transmission/transfer of data files.

### Technical background

At transmission/transfer of data files from a transmitting unit, or a server, to a receiving unit, for instance over Internet, it is of frequent occurrence that the transmitting unit or the network that is utilized for the transmission is overloaded. This can result in that the transmission speed from a server to the receiving unit will be very low, which in its turn results in very long duration of transmission and also can result in that the transmission fails.

It is, however, usual, for instance on Internet, that files are copied and distributed to a plurality of servers in order to spread the load on these servers which files that are often requested to be transmitted can result in. This will reduce the risk of overload and of course also opens up for the possibility to break a too slow transmission of a file and request transmission of that file from another server.

One problem in the connection is that the user or the receiving unit does not know which server or which part of the network that for the time being has a low load. By that, there of course is the risk that also this server is, or will be, overloaded and that the transmission speed is reduced, or has to be interrupted/cut off. At interrupted/cut off transmission the whole file must, in addition, in most cases be transmitted/transferred again from the same or another server.

The document JP11242640 discloses data file transmission wherein slices of the data file are transmitted via several data connections and wherein the slices start at arbitrary positions.

### Summary of the invention

One aim of the present invention is to accomplish a procedure at transmission/transfer of one or more data files from transmitting units, in which examples of the data file or the data files are stored, to receiving units, which procedure causes a rapid transmission and an even utilization of the transmitting units and the network that is utilized. This aim is achieved according to the present invention by a procedure according to the enclosed patent claims.

According to one aspect of the present invention, a procedure is accomplished at transmission/transfer of data files from transmitting units to receiving units, at which examples of the data files that shall be transmitted are stored in a plurality of transmitting units. By the procedure is in at least two transmitting units control commands for request for transmission of a share each of at least one data file received from a receiving unit. Said each share is then transmitted/transferred together with information which indicates the position of said each share in said at least one data file from each of the at least two transmitting units to the receiving unit.

The invention consequently is based on the knowledge of the advantage of transmission of shares of at least one data file from a plurality of transmitting units by different shares of said at least one data file being transmitted/transferred from different transmitting units. This results in the advantage that only one share of said at least one data file is influenced if a transmitting unit is overloaded and the transmission speed of this unit is strongly reduced. By that, the total transmission time of said at least one data file can be considerably reduced compared with if said at least one data file should be transmitted/transferred in its entirety from a transmitting unit with low transmission speed. Further, the transmission of information which indicates the position in said at least one data file of a share which is transmitted/transferred provides basic data to the transmitting unit at recreation of said at least one file, based on the transmitted shares. The procedure according to the invention requires that at least one example of each of the data files that shall be transmitted/transferred exist at at least two transmitting units.

By shares are meant a certain amount of information of a number of data files, such as a share of a data file, a data file, a number of data files or a number of complete data files and a share of a data file. According to the invention, the data files that shall be transmitted/transferred consist of at least two shares of the same size or of varying size. The size and number of the shares, and which share of the data files that the shares constitute, is decided by the unit that requests the transmission.

According to one preferred embodiment is in a first transmitting unit control commands for request for a size of at least one data file received from a receiving unit, whereupon information regarding the size of said at least one data file is transmitted from the first transmitting unit to the receiving unit. This gives the advantage that the transmitting unit before the transmission/transfer starts will have basic data which facilitates the determination of the number of shares, the size of respective share and which transmitting unit that shall transmit/transfer respective share. Further, the control commands from said receiving unit for request for transmission preferably include a start byte position and an end byte position for said each share in said at least one data file.

The transmitting units then preferably are utilized depending on the transmission speeds they can offer. This is done in a preferred embodiment by the transmission speed from respective unit being estimated, and that the size of respective share is determined on basis of the estimated transmission speed. This gives the advantage that the transmission/transfer can be performed more efficient.

According to another embodiment of the invention, the transmission capacity of the transmitting units which first finish the transmission/transfer of their share of the data files to the receiving unit is utilized also for transmission of the shares for which the transmission have started but not been finished. Preferably this is done by a control command for request for transmission of a share which has not been completely transmitted/transferred being transmitted/transferred to the transmitting unit which has finished its transmission. The advantage which is achieved by this embodiment of the invention is that several shares can be transmitted/transferred from the transmitting units which have highest capacity without any check or estimation of the respective transmission speed being needed before transmission of the data files are requested. This step is repeated until all shares of the data files have been transmitted/transferred. Preferably, but not necessarily, all transmissions of a share of the data files which have not been finished are interrupted/cut off when the transmission of this share has been finished from a transmitting unit.

In order to achieve the advantage of a higher total transmission speed, is first, according to one embodiment of the invention, a check made on for which share, or from which transmitting unit, the transmission speed has been lowest, that is, where largest part of the share still remains to be transmitted/transferred. After that, transmission of just this share of the data files is requested. The advantage of this is that the risk for a locking caused by the transmission from a transmitting unit being stopped or being performed very slowly, for instance due to overload of network or server, is eliminated. Further is preferably requested transmission/transfer of only a share of the share of which largest share of the share still remains to be transmitted/transferred from the unit which has finished transmission/transfer of a segment. This share constitutes the, or a part of the, share of the share where transmission has not yet been finished. By that no request is made for transmission of any share of a share of the data files which already have been transmitted/transferred to the receiving unit, which results in the advantage that the total transmission speed can be further improved.

To achieve an even higher total transmission speed, the share is, according to one preferred embodiment, in each of the transmitting units, as response to a control command for transmission of a share of the data files, placed in a buffer. Shares in the buffer then are transmitted/ transferred to said receiving unit via just one asynchronous transmission channel. That all shares from a transmitting unit are transmitted/transferred via just one asynchronous transmission channel has the advantage that a considerably shorter time is required for establishing of transmission channels at transmission of a number of shares than known procedures where a new transmission channel is established for each transmission/transfer which in its turn results in a shorter time for transmission/transfer of the data files.

According to another embodiment, each of the shares from respective transmitting unit is transmitted/transferred in data packets. At that, respective share is divided into segments and the segments are packeted in a data part of a data packet each. The data packets are equipped with a head each which includes a number of identity byte which identifies the data file to which the data packet relates, and a number of position byte which indicate a position in said at lest one data file for the segment which the data part of the data packet includes. Further, the data packets are placed in a buffer and transmitted/transferred to said receiving unit via just one asynchronous transmission channel. One effect of this embodiment is that the receiving unit can identify which data file a transmitted/transferred data packet belongs to, and which position that segment which the data packet includes has in said at least one file. This gives the advantage that recreation of said at least one data file in the receiving unit, and also the check on for which share the transmission speed has been lowest, will be easier.

In another embodiment also data packets, the data part of which includes other data than segments of said at least one data file, are transmitted/transferred. In this respect the head of a data packet which includes a segment further includes a number of type byte for indication of that the data part of the data packet includes a segment of a data file, and a number of size byte for indication of the size of the data part of the data packet. According to this embodiment a data packet, the data part of which includes the name of the data file to which the data packet relates, is preferably transmitted from each of said at least two transmitting units for each data file of said each share of said at least one data file. For this type of data packets the head of the data packet includes a number of type byte which indicate that the data part of a data packet includes a name of a data file. Further, a data packet, the data part of which includes the size of the data file to which the data packet relates, is transmitted/ transferred according to this embodiment preferably from each of said at least two transmitting units for each data file of said each share of said at least one data file. For this type of data packets the head of the data packet includes a number of type byte which indicates that the data part of the data packet includes a size of a data file.

The present invention consequently results in the general advantage that a spreading of the load that is caused by file transmission/transfer is achieved in such a way that the route which on each occasion is least loaded will be most utilized for the transmission/transfer of the file of current interest. By that, also the situation for the users who do not use the procedure or device according to the present invention is improved.

It is realized that the above discussed embodiments and distinctive features can be combined in advantageous ways depending on current application.

Further qualities of the invention will be obvious by the following description of exemplifying embodiments of these and by the enclosed patent claims.

### Brief description of the drawings

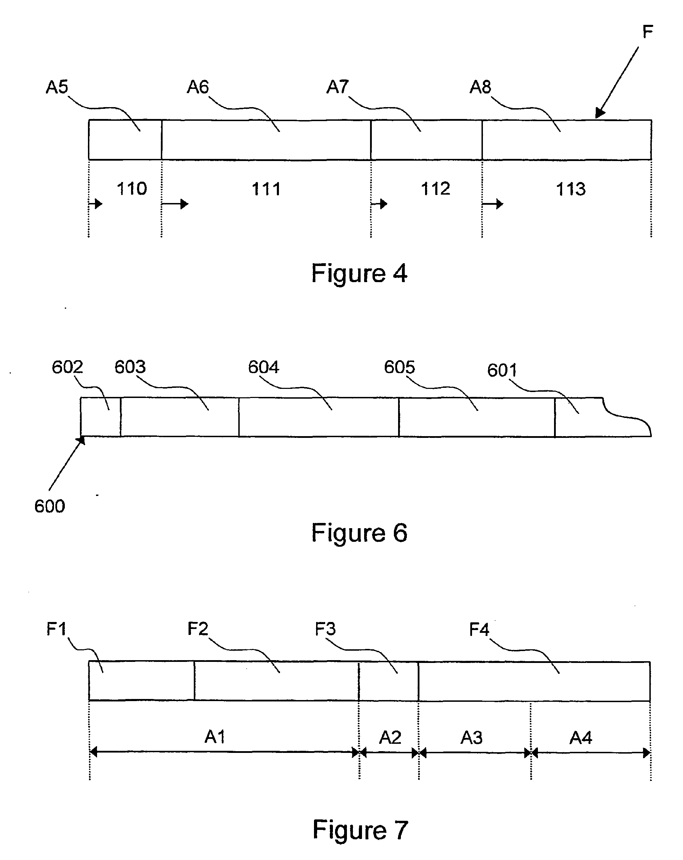

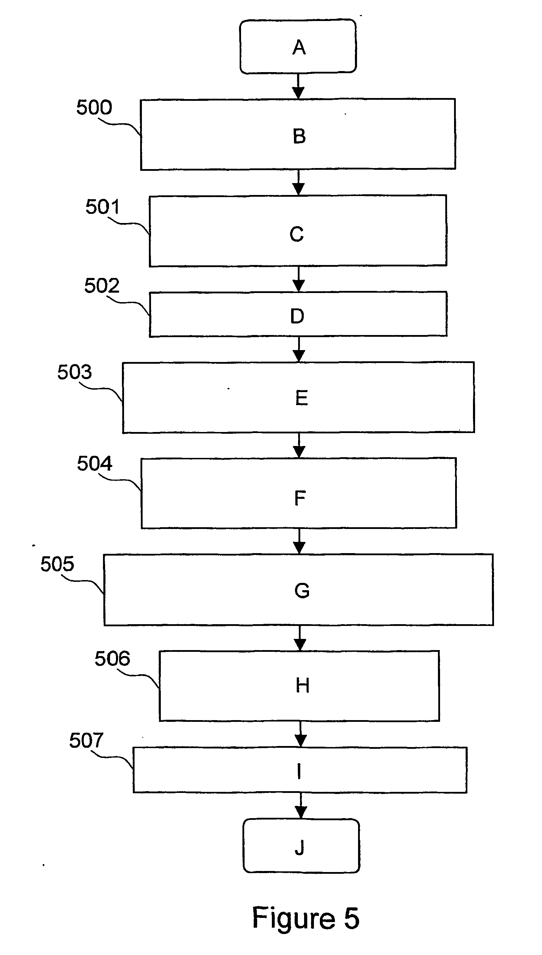

The invention now will be described in more details in the following with reference to enclosed drawings, in which
Figure 1 schematically shows a system for effecting a procedure according to the present invention;
Figure 2a-2d schematically shows a process according to a preferred embodiment of the present invention;
Figure 3a-3d schematically shows a process according to a preferred embodiment of the present invention;
Figure 4 schematically shows a step corresponding to the step which is shown in Figure 2a respective 3a of a process of an alternative embodiment of the present invention;
Figure 5 shows a schematical flow chart for an embodiment of the present invention;
   A = Start
   B = Transmit/transfer request for size
   C = Receive request for size
   D = Transmit/transfer size
   E = Transmit/transfer request for transmission/transfer of shares
   F = Receive request for transmission/transfer
   G = Divide shares into segments and place in data packets
   H = Place data packets in buffer
   I = Transmit/transfer data packets
   J = Stop
Figure 6 shows a data packet according to an embodiment of the present invention, and
Figure 7 shows a number of schematically illustrated files which have been divided into a number of shares.

### Description of preferred embodiments

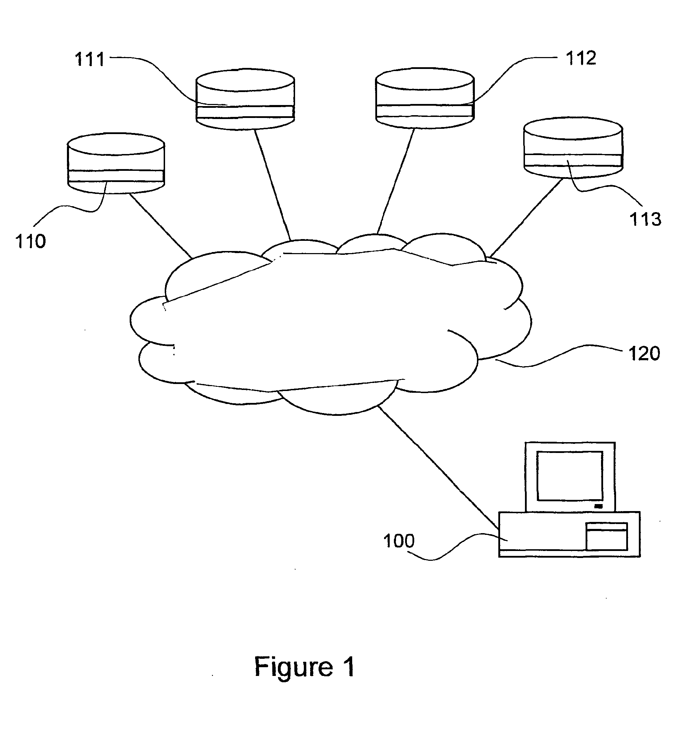

Figure 1 shows schematically a system to effect the procedure according to embodiments of the invention. The system includes a receiving unit or computer 100, and a number of transmitting units or servers 110, 111, 112, 113, which all are interconnected by connection to a network 120, which in preferred embodiments is Internet. At respective server 111, 112, 113, 114 is stored at least one example of a data file that one wants to have transmitted to the computer 100. In order to facilitate the description, the number of illustrated servers has been limited to four, which shall not be regarded as a limitation or recommendation for suitable number of servers.

Communication between computer and server is best done according to standardized and well known IP-protocols.

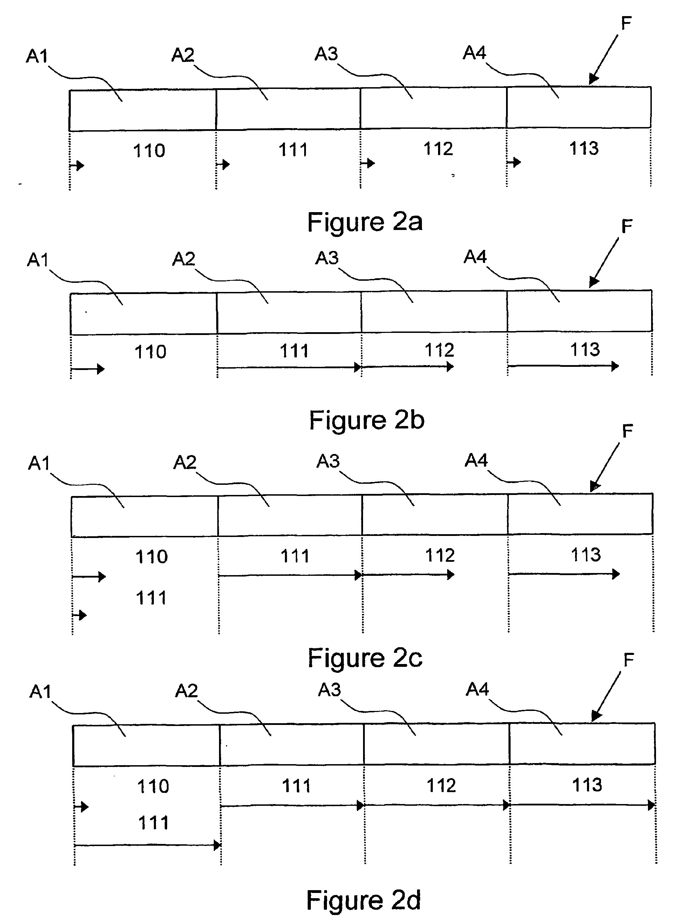

With reference to the Figures 2a-2d is schematically shown an example of a process according to a preferred embodiment and a procedure according to the present invention. According to this example is supposed that the files which one wants to have transmitted can be transmitted/transferred home from four different servers. The reference designation F relates to a number of schematically illustrated data files, which one wants to have transmitted/transferred to the computer 100, and the reference designations A1-A4 indicate shares of the files F, at which respective share in this example is a number of files of the files F. According to this example control commands for request for home-loading of the files F from the servers 100-104 are transmitted/transferred. More exactly, a control command is transmitted/transferred to a first server 110 for request for transmission of a first share A1 of the files F, a control command to a second server 111 for request for transmission of a second share A2, a control command to a third server 112 for request for transmission of a third share A3, and a control command to a fourth server 113 for request for transmission of a fourth share A4. This is illustrated in Figure 2a, where the figure under respective share refers to the server 110-113 from which a transmission/transfer of respective share A1-A4 has been requested, and where the arrow under respective share illustrates how large part of the share that has been transmitted/transferred. As is realized from the short arrows in Figure 2a, this figure illustrates that the loading home of the shares A1-A4 from the different servers 100-113 just has started. Together with each of the shares A1-A4 also information is transmitted/transferred which indicates the position of respective share in the data files. According to this example each share is a whole number of files which results in that an indication about when the transmission/transfer of a new file in the share starts is sufficient to have the file recreated in the receiving unit.

Figure 2b illustrates the transmission/transfer of the shares A1-A4 when the transmission has been going on for a certain period of time. As can be seen in the Figure, the transmission/transfer of the share A1 from server 110 is slow, the transmission of the share A2 from server 111 has been very rapid and is already finished, whereas the transmission of the shares A3 and A4 from server 112 respective 113 is relative fast. When the loading home of the share A2 from server 111 is finished, the transmission/transfer is finished and a control command for request for transmission of one more share of the data files F from server 111 is transmitted from the computer 100 to the server 111. Because the share A1 is the segment where largest share of the share remains to be loaded home, transmission/transfer of just this share is requested, which is illustrated in Figure 2c just after transmission of the share A1 from server 111 has started. As can be seen in Figure 2c, the share A1 is loaded home parallel from both server 110 and 111 and the whole share A1 is transmitted/transferred from server 111.

The transmission/transfer of the data files F is finished when the transmission/transfer of all shares A1-A4 of the data file has been finished. As can be seen in Figure 2d, server 111 has finished the transmission/transfer of the share A1, and the servers 112 and 113 finished the transmission of shares A3 respective A4. Because the transmission/transfer of the share A2 has been earlier finished, all shares A1-A4 of the data files F have been transmitted/transferred and the transmission process can be stopped, that is, the transmission/transfer in progress of the share A1 from server 110 is stopped/cut off. In the described process the transmission/transfer from the servers 111,112 and 113 are finished essentially at the same point of time, which not necessarily is the case. If the transmission/transfer of any share has been finished while the transmission of any other share has not been finished, a control command for request for transmission/transfer of this share from the server which just has finished its transmission is transmitted. This is then repeated until all segments are completely transmitted/transferred.

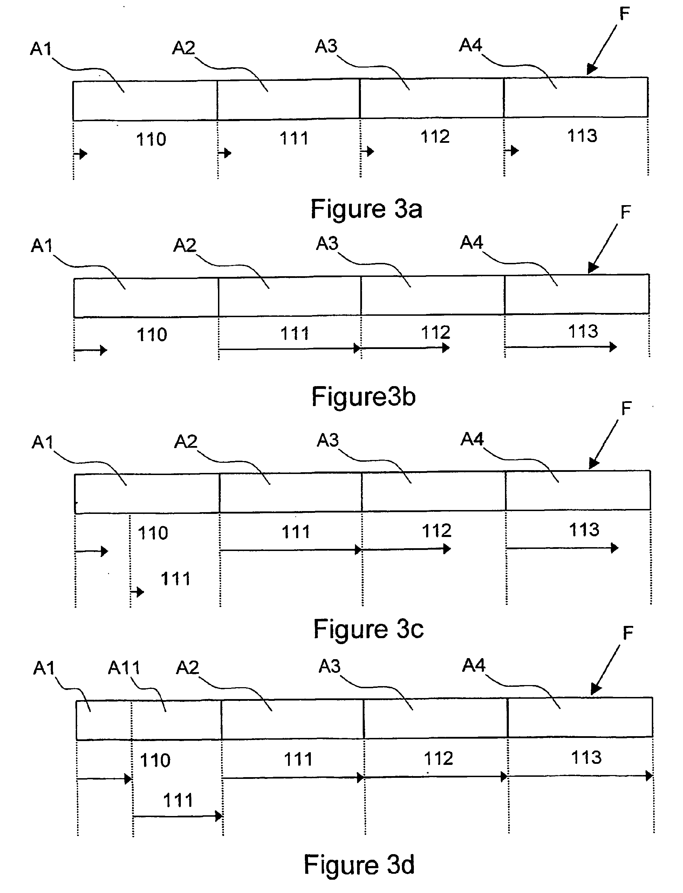

With reference to the Figures 3a-3d is schematically shown a preferred embodiment of the invention. The Figures 3a and 3b shows the process which was described above with reference to the Figures 2a and 2b, which for that reason will not be described in detail. In the same way as in the above described example, server 111 has finished the transmission/transfer of share A2 and a control command for request for transmission of the share A1, for which largest share of the share remains to be transmitted/transferred, is transmitted/transferred to the server 111. At this request is taken into consideration how large part of the share A1 that already has been transmitted/ transferred, that is it is only for the share of the share A1 that remains to be transmitted that transmission/transfer is requested. The transmission/transfer of the remaining share of the share A1 is then made parallel, or, as is shown in Figure 3c, the transmission of the remaining share of the share A1 is divided between server 110 and server 111.

At this division, consideration is taken to the transmission speeds of server 110 and 111, and divides the remaining files of the share A1 in proportion to these transmission speeds. The transmission speeds in question are based on the amount of data which so far has been transmitted/transferred from respective server. This means that if server 111 relieves server 110 of the remaining files, which is illustrated by the reference designation A11 in Figure 3c, of the share A1 and if the transmission/transfer from respective server is made with the same speed as so far, the transmission/transfer of respective share from the two servers 110, 111 will essentially take the same time.

Before transmission of the file is requested, the receiving computer 100 first makes an estimation of the expected transmission speed from respective server where examples of the wanted files are. This estimation is then used to select from which servers, which need not be all servers where examples of the files are, transmission/transfer of the files, or share of the file, shall be requested.

According to an alternative embodiment this estimation is also used, which is shown as an example in Figure 4, to request transmission/transfer of shares A5-A8 of different size from the servers of current interest. According to this example the transmission speed for server 110 has been estimated to be very high, so transmission of a larger share of A5 of the data files is requested from this server 111. Further, the total size of the files F has been received from one of the servers 110-113. The size of respective share A5-A8 is preferably decided proportional to the transmission speed for respective server 110-113. This means that the transmission from respective server 110-113 should be of essentially the same time. If that is not the case, transmission/transfer of not completely transmitted/transferred shares is requested in the same way as is described above.

In the following, one more embodiment of a procedure according to the invention will be described with reference to the Figures 5-7. In Figure 5 is shown a flow chart for this embodiment, in Figure 6 is shown a data packet which is used in this embodiment, and in Figure 7 are shown a number of schematically illustrated files. According to this example four files F1-F4 (see Figure 7) shall be transmitted/transferred from four servers 110-113 to the computer 100 by means of FTP. The file F1 has the size 2 kB, the file F2 has the size 3 kB, the file F3 has the size 1 kB, and the file F4 has the size 4 kB. It should be observed that the selected number of files and their sizes only are examples. Consequently is for each server established a transmission channel in form of a TCP-connection from a logic port in the server to a logic port in the computer 100 according to procedures which are known to the expert. Further is established for each server also a corresponding TCP-connection from a logic port in the server to a logic port in the computer 100, at which these TCP-connections function as control channels for transmission of control commands from the computer 100 to the servers 110-113. According to this example is first transmitted in a step 501 a control command for request for the total size of the data files F1-F4 via one of the control channels to one of the servers 110-113 from the computer 100. The control command is of the type "get size of amount of file". The control command is received in the server in a step 502, and the server transmits in a step 503 as response two data packets 600 (see Figure 6) to the computer 100. The first data packet includes information which connects the name "amount of file" to a unique identification, and the second data packet includes the size of the data files connected to the unique identification. The data packets consist of a head for administrative information and a data part 601 for data. In the head there are a number of type byte 602 for indication of which type of data the data part of the data packet includes, a number of size byte 603 for indication of the size of the data part of the data packet, a number of identity byte 604 for identification of the data file or the data files to which the data packet relates, and a number of position byte 605, for indication of a position in a number of files. The content in the data part of a data packet for the different types of data packets which are used in this embodiment is shown below in Table 1.

**Table 1**

| Type | Content in the data part of the data packet |
|---|---|
| 1 | A name of a file |
| 2 | A size of one or more files |
| 3 | The last segment of one or a number of data files |
| 253 | A segment of one or a number of data files |
| 254 | A segment of one or a number of data files |
| 255 | A segment of one or a number of data files |

For data packets of the type 1, 2, 3 and 255, the number of position byte is zero, whereas they for data packets of the type 253 and 254 are 8 respective 4. These position byte are intended to be used at the recreation of the data files F1-F4 in the computer 100 after transmission/transfer by the segment that is transmitted/transferred in a data packet being sorted in in a place in the data files F1-F4, according to the position byte which are in the data packet. Said position byte in a data packet includes in this example the number of the byte position in the files F1-F4 in which a first byte in the segment that is transmitted/transferred in the data part of the data packet shall be placed at the recreation of the files F. In the step 503 a data packet of type 1 and a data packet of type 3 are transmitted/transferred. The content in these two data packets for this example is shown in Table 2 below.

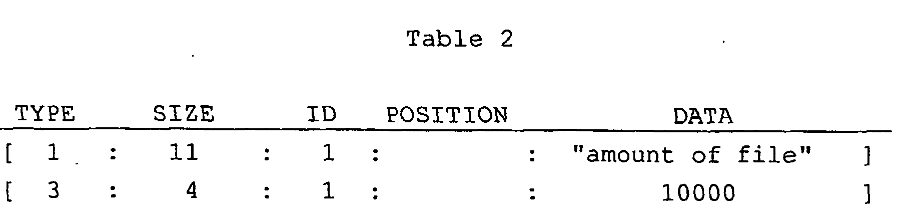

Of course can also other control commands be transmitted according to the FTP-standard, such as control commands for navigation and listing of data files. When the total size of the files F1-F4 is known in the computer 100, these files F1-F4 can be divided into a number of shares A1-A4 (see Figure 7) according to any of the above described embodiments. In this example, the sizes of the shares have been selected on basis of the expected transmission speed from respective server, where the server 110 is expected to have a high transmission speed, the server 111 is expected to have a low transmission speed, and the servers 112 and 113 are expected to have a medium high transmission speed. A control command for request for transmission of a share each of the shares A1-A4 is now transmitted/transferred in a step 504 from the computer 100 to each of the servers 110-113 via respective control channel. More exactly, transmission/transfer is requested for the share A1 from the server 110, the share A2 from the server 111, the share A3 from the server 112, and the share A4 from the server 113. The share A1 includes the file F1 and the file F2, the share A2 includes the file F3, the share F4 includes the first half of the file F4, and the share A includes the second half of the file F4. The control commands are of the type "get amount of file from x to y", where x indicates a start byte and y indicates an end byte in the files F1-F4 for a share. Each of the servers 110-113 then in a step 505 receives one of the control commands for request for transmission/transfer of a share. In each of the servers 110-113 now in a step 506 respective share of the files F1-F4 is divided into segments which are packeted in a data part of a data packet each 600 of type as described above. The size of the segments is a free choice. When a segment has been packeted in a data packet, this data packet is placed in a buffer in a step 507. For each data file in respective share of the data files F1-F4 is also created a data packet 600 of the type 1, the data part of which includes the name of the data file to which the data packet relates. Further is created for each data file a data packet 600 of the type 2, the data part of which includes the size in byte of the data file to which this data packet relates. All data packets are then in a step 508 transmitted/transferred from respective server to the computer 110 via respective transmission channel. The data packets which are transmitted/transferred from respective server at the transmission/transfer of the data files "amount of files" on 10 kB according to this example can be seen in the Tables 3-6 below.

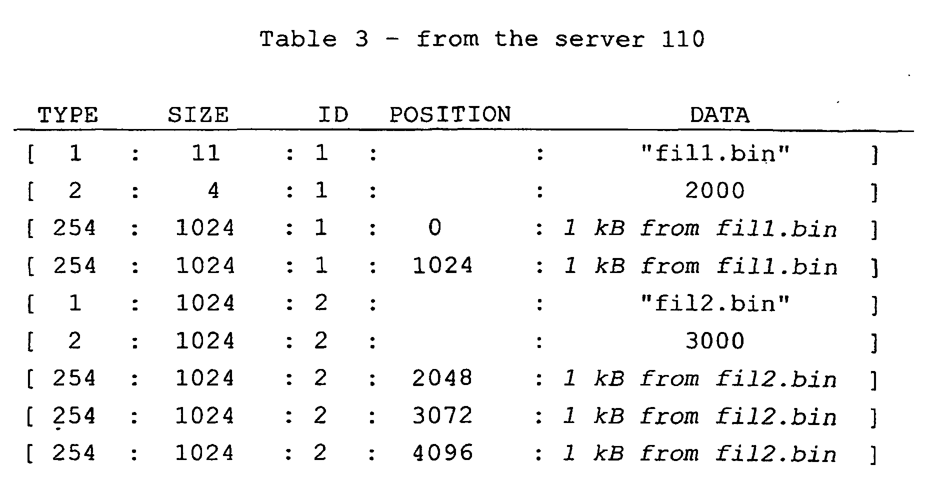

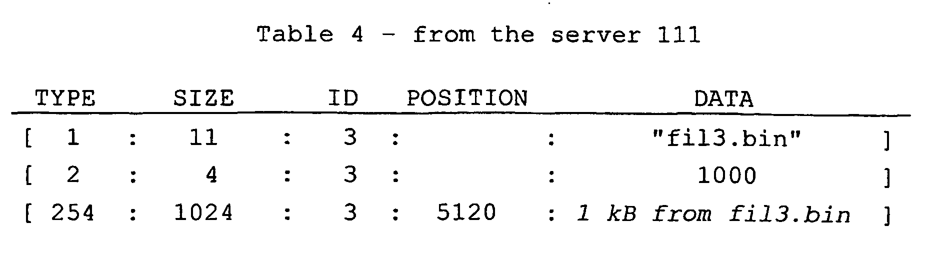

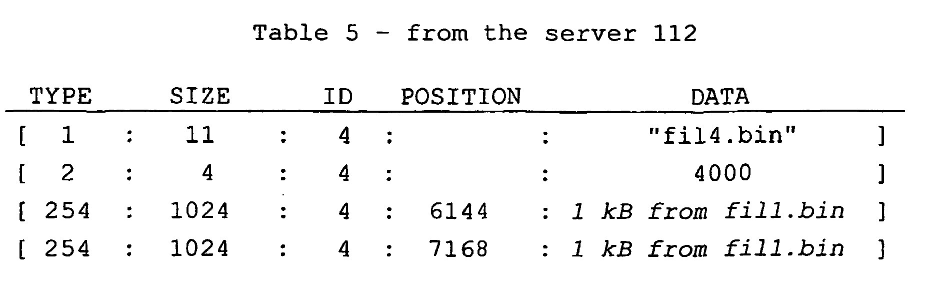

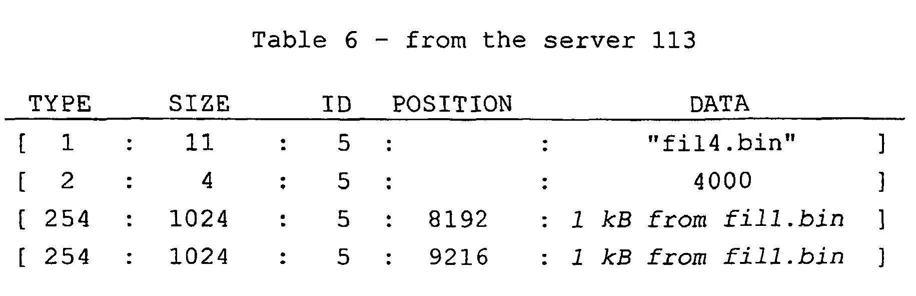

It is realized from the tables 3-6 that more files can be transmitted/transferred from a server, and that parts of a file can be transmitted/transferred from more than one server. When all the shares A1-A4 have been transmitted/transferred to the computer 100, the files F1-F4 are recreated by means of said position byte in each data packet. This embodiment can with advantage be combined with the embodiments which have been described above with reference to the Figure 2a-2d and the Figures 3a-3b.

Shown embodiments of the present invention can preferably be realized by implementation which utilizes File Transfer Protocol (FTP), which is a part of the IP-standard.

## Claims

1. Procedure at transmission/transfer of data files from transmitting units (110, 111, 112, 113) to receiving units (100), at which examples of the data files which shall be transmitted/transferred are stored in a plurality of transmitting units, including the steps
to, in at least two transmitting units (110, 111, 112, 113), receive control commands from a receiving unit (100) for request for transmission/transfer of a share each of at least one data file, and
to, from each of said at least two transmitting units, transmit/transfer said each share together with information which indicates the position of said each share in said at least one data file to said receiving unit
to estimate the transmission speeds from respective transmitting unit,
to, from the receiving unit, transmit/transfer control commands to said at least two transmitting units for request for transmission/transfer of a share each of said at least one data file, at which the size of respective share is determined on basis of the estimated transmission speeds.

2. Procedure as claimed in patent claim 1, further including the steps
to, in a first transmitting unit, receive control commands from a receiving unit for request for a size of at least one data file, and
to transmit/transfer information regarding the size of said at least one data file from said first transmitting unit to said receiving unit.

3. Procedure as claimed in patent claim 1 or 2, at which said control commands from said receiving unit for request for transmission/transfer includes a start byte position and an end byte position for said each share in said at least one data file.

4. Procedure as claimed in any of the patent claims 1-3, further including the steps
to, from said receiving unit, when the transmission/transfer of a share from a transmitting unit is finished, to said transmitting unit transmit a control command for request for transmission/transfer of one more share of said at least one data file, at which the transmission/transfer of said one more share has started from another transmitting unit.

5. Procedure as claimed in patent claim 4, at which the step to transmit/transfer a control command for request for transmission/transfer of one more share includes the steps
to determine for which share that largest part of the share remains to be transmitted/transferred, and
to, from said receiving unit, transmit/transfer control commands for request for transmission/transfer of the determined share.

6. Procedure as claimed in patent claim 5, at which the step to transmit/transfer a control command for request for transmission/transfer of the determined share includes the step
to, from said receiving unit, transmit a control command for request for transmission/transfer of only a share of the determined share, at which this share is included in the share of the share which has not yet been transmitted/ transferred.

7. Procedure as claimed in any of the patent claims 1-6, further including the step
to, in each of said at least two transmitting units, as response to a control command for transmission/transfer of a share of said at least one data file, place said share in a buffer, at which said share in said buffer is transmitted/transferred to said receiving unit via just one asynchronous transmission channel

8. Procedure as claimed in any of the patent claims 1-6, at which the step to transmit/transfer said each share includes the steps to in each of said at least two transmitting units
divide said each share into segments,
packet said segments in a data part of a data packet each,
provide said data packets with a head each, which includes a number of identity byte which identify the data file to which the data packet relates, and a number of position byte which indicate a position in said at least one data file for the segment which the data part of the data packet includes,
place said data packets in a buffer, and
transmit/transfer said data packets in said buffer to said receiving unit via just one asynchronous transmission channel.

9. Procedure as claimed in patent claim 8, at which said position byte includes a byte position in said at least one data file for a first byte of the segment which the data part of the data packet includes.

10. Procedure as claimed in patent claim 8 or 9, at which said head further includes a number of type byte for indication of that the data part of the data packet includes a segment of a data file, and a number of size byte for indication of the size of the data part of the data packet.

11. Procedure as claimed in patent claim 10, further including the step
to, from each of said at least two transmitting units for each data file of said each share of said at least one data file transmit/transfer a data packet which includes a head and a data part, at which said head includes a number of type byte which indicate that the data part of the data packet includes a name of a data file, a number of size byte which indicate the size of the data part of the data packet, and a number of identity byte which identify the data file to which the data packet relates, and at which said data part includes the name of the data file to which the data packet relates.

12. Procedure as claimed in patent claim 10 or 11, further including the step
to, from each of said at least two transmitting units for each data file of said each share of said at least one data file transmit/transfer a data packet which includes a head and a data part, at which said head includes a number of type byte which indicate that the data part of this data packet includes a size of a data file, a number of size byte which indicate the size of the data part of the data packet, and a number of identity byte which identify the data file to which this data packet relates, and at which said data part includes the size of the data file to which this data packet relates.

13. Procedure as claimed in patent claim 10 or 11, at which the last segment of each of the plurality of data files are transmitted/transferred in a data packet, the head of which includes a type designation which indicates that the data part of the data packet includes the last segment of a data file.

14. Procedure as claimed in any of the patent claims 1-13, at which the step to transmit/transfer information regarding the size of said at least one data file includes the steps
to, in said first transmitting unit, packet information regarding the size of said at least one data file in a data part of a data packet,
to provide said data packet with a head which includes a number of identity byte for identification of the data file to which the data packet relates, and
to transmit/transfer said data packet from said transmitting unit to said receiving unit.

15. Procedure as claimed in any of the patent claims 7-14, at which said transmission channel is a TCP-connection.

16. Computer program including program steps performing the steps in a procedure according to any of the patent claims 1-15.

17. A computer readable medium including instructions performing the steps in a procedure according to any of the patent claims 1-15.

## Revendications

1. Procédure de transmission/transfert de fichiers de données depuis des unités de transmission (110, 111, 112, 113) vers les unités de réception (100), au niveau de laquelle des exemples de fichiers de données qui seront transmis/transférés, sont stockés dans une pluralité d'unités de transmission, comprenant les étapes consistant à
recevoir, dans au moins deux unités de transmission (110, 111, 112, 113) les commandes de contrôle depuis une unité de réception (100) pour une requête de transmission/transfert d'une part de chacun d'au moins un fichier de données, et
transmettre/transférer, depuis chacune desdites au moins deux unités de transmission, ladite chaque part conjointement aux informations qui indiquent la position de ladite chaque part dans ledit au moins un fichier de données vers ladite unité de réception
estimer les vitesses de transmission depuis l'unité de transmission respective,
transmettre/transférer, depuis l'unité de réception, les commandes de contrôle vers lesdites au moins deux unités de transmission pour une requête de transmission/transfert d'une part de chacun dudit au moins un fichier de données, au niveau de laquelle la taille de la part respective est déterminée sur la base des vitesses de transmission estimées.

2. Procédé selon la revendication 1, comprenant en outre les étapes consistant à
recevoir, dans une première unité de transmission, les commandes de contrôle depuis une unité de réception pour une requête d'une taille d'au moins un fichier de données, et
transmettre/transférer des informations concernant la taille dudit au moins un fichier de données depuis ladite unité de transmission vers ladite unité de réception.

3. Procédure selon la revendication 1 ou 2, au niveau de laquelle lesdites commandes de contrôle depuis l'unité de réception pour une requête de transmission/transfert comprennent une position d'octets de départ et une position d'octets de fin pour ladite chaque part dans ledit au moins un fichier de données.

4. Procédure selon l'une quelconque des revendications 1 à 3, comprenant les étapes consistant à
transmettre, depuis l'unité de réception, lorsque la transmission/le transfert d'une part depuis une unité de transmission est terminée, vers ladite unité de transmission, une commande de contrôle pour une requête de transmission/transfert d'une part supplémentaire dudit au moins un fichier de données, au niveau de laquelle la transmission/le transfert de ladite une part supplémentaire a commencé depuis une autre unité de transmission.

5. Procédure selon la revendication 4, au niveau de laquelle l'étape de transmission/transfert d'une commande de contrôle pour une requête de transmission/transfert d'une part supplémentaire comprend les étapes consistant à
déterminer pour quelle part cette plus grande partie de part reste à transmettre/transférer, et
transmettre/transférer, depuis ladite unité de réception, les commandes de contrôle pour une requête de transmission/transfert de la part déterminée.

6. Procédure selon la revendication 5, au niveau de laquelle l'étape de transmission/transfert d'une commande de contrôle pour une requête de transmission/transfert de la part déterminée comprend l'étape consistant à
transmettre, depuis ladite unité de réception, une commande de contrôle pour une requête de transmission/transfert d'une seule part de la part déterminée, au niveau de laquelle cette part est comprise dans la part de la part qui n'a pas encore été transmise/transférée.

7. Procédure selon l'une quelconque des revendications 1 à 6, comprenant en outre l'étape consistant à
dans chacune desdites au moins deux unités de transmission, en réponse à une commande de contrôle pour la transmission/le transfert d'une part dudit au moins un fichier de données, placer ladite part dans une mémoire tampon, au niveau de laquelle ladite part dans ladite mémoire tampon est transmise/transférée vers ladite unité de réception via une seule voie de transmission asynchrone.

8. Procédure selon l'une quelconque des revendications 1 à 6, au niveau de laquelle l'étape de transmission/transfert de ce que l'on appelle chaque part comprend les étapes consistant à, dans chacune desdites au moins deux unités de transmission
diviser ladite chaque part en segments,
mettre en paquets lesdits segments dans une partie de données d'un paquet de données chacun,
munir lesdits paquets de données d'une tête chacun, qui comprend un nombre d'octets d'identité qui identifient le fichier de données auquel se rapporte le paquet de données, et un nombre d'octets de position qui indiquent une position dans ledit au moins un fichier de données pour le segment que comprend la partie de données du paquet de données,
placer lesdits paquets de données dans une mémoire tampon, et
transmettre/transférer lesdits paquets de données dans ladite mémoire tampon vers ladite unité de réception via une seule voie de transmission asynchrone.

9. Procédure selon la revendication 8, au niveau de laquelle ledit octet de position comprend une position d'octets dans ledit au moins un fichier de données pour un premier octet du segment que comprend la partie de données du paquet de données.

10. Procédure selon la revendication 8 ou 9, au niveau de laquelle ladite tête comprend en outre un nombre d'octets type pour indiquer que la partie de données du paquet de données comprend un segment d'un fichier de données, et un nombre d'octets de taille pour indiquer la taille de la partie de données du paquet de données.

11. Procédure selon la revendication 10, comprenant en outre l'étape consistant à
depuis chacune desdites au moins deux unités de transmission pour chaque fichier de données de ladite chaque part dudit au moins un fichier de données, transmettre/transférer un paquet de données qui comprend une tête et une partie de données, au niveau de laquelle ladite tête comprend un nombre d'octets type qui indiquent que la partie de données du paquet de données comprend un nom d'un fichier de données, un nombre d'octets de taille qui indiquent la taille de la partie de données du paquet de données, et un nombre d'octets d'identité qui identifient le fichier de données auquel se rapporte le paquet de données, et au niveau de laquelle ladite partie de données comprend le nom du fichier de données auquel se rapporte le paquet de données.

12. Procédure selon la revendication 10 ou 11, comprenant en outre l'étape consistant à
depuis chacune desdites au moins deux unités de transmission pour chaque fichier de données de ladite chaque part dudit au moins un fichier de données, transmettre/transférer un paquet de données qui comprend une tête et une partie de données, au niveau de laquelle ladite tête comprend un nombre d'octets type qui indiquent que la partie de données de ce paquet de données comprend une taille d'un fichier de données, un nombre d'octets de taille qui indiquent la taille de la partie de données du paquet de données, et un nombre d'octets d'identité qui identifient le fichier de données auquel se rapporte ce paquet de données, et au niveau de laquelle ladite partie de données comprend la taille du fichier de données auquel se rapporte ce paquet de données.

13. Procédure selon la revendication 10 ou 11, au niveau de laquelle le dernier segment de chacun de la pluralité des fichiers de données est transféré/transmis dans un paquet de données, dont la tête comprend une désignation type qui indique que la partie de données du paquet de données comprend le dernier segment d'un fichier de données.

14. Procédure selon l'une quelconque des revendications 1 à 13, au niveau de laquelle l'étape de transmission/transfert des informations concernant la taille dudit au moins un fichier de données comprend les étapes consistant à
dans ladite première unité de transmission, mettre en paquet des informations concernant la taille dudit au moins un fichier de données dans une partie de données d'un paquet de données,
munir ledit paquet de données d'une tête qui comprend un nombre d'octets d' identité pour une identification du fichier de données auquel se rapporte le paquet de données, et
transmettre/transférer ledit paquet de données depuis ladite unité de transmission vers ladite unité de réception.

15. Procédure selon l'une quelconque des revendications 7 à 14, au niveau de laquelle ladite voie de transmission est une connexion TCP.

16. Programme informatique comprenant des étapes de programme exécutant les étapes dans une procédure selon l'une quelconque des revendications 1 à 15.

17. Support lisible par ordinateur comprenant des instructions exécutant les étapes dans une procédure selon l'une quelconque des revendications 1 à 15.

## Patentansprüche

1. Verfahren beim Senden/Übertragen von Dateien von Sendeeinheiten (110, 111, 112, 113) zu Empfangseinheiten (100), bei dem Beispiele der Dateien, die gesendet/übertragen werden sollen, in einer Mehrzahl von Sendeeinheiten gespeichert sind/werden, das die Schritte einschließt:
in wenigstens zwei Sendeeinheiten (110, 111, 112, 113) Steueranweisungen von einer Empfangseinheit (100) für Anforderung von Senden/Übertragen eines Anteils jeder der wenigstens einen Datei zu empfangen; und
von jeder der wenigstens zwei Sendeeinheiten jeden diesen Anteil zusammen mit Information zu senden/übertragen, die die Position jedes dieses Anteils in der wenigstens einen Datei der Empfangseinheit anzeigt;
die Sendegeschwindigkeit von der entsprechenden Sendeeinheit zu schätzen;
von der Empfangseinheit Steueranweisungen zu den wenigstens zwei Sendeeinheiten zu senden/übertragen, um Senden/Übertragen eines Anteils jeder der wenigstens einen Datei anzufordern, wobei die Größe des entsprechenden Anteils aufgrund der geschätzten Übertragungsgeschwindigkeiten bestimmt wird.

2. Verfahren nach Patentanspruch 1, das weiter die Schritte aufweist:
in einer ersten Sendeeinheit Steueranweisungen von einer Empfangseinheit für eine Abfrage der Größe der wenigstens einen Datei zu empfangen, und
Information zu senden/übertragen, die die Größe der wenigstens einen Datei von der ersten Sendeeinheit zu der Empfangseinheit betrifft.

3. Verfahren nach Patentanspruch 1 oder 2, bei dem die Steueranweisungen von der Empfangseinheit für Anforderung des Sendens/Übertragens eine Startbyteposition und eine Endbyteposition für jeden diesen Anteil in der wenigstens einen Datei einschließt.

4. Verfahren nach einem der Patentansprüche 1 bis 3, das weiter die Schritte aufweist:
von der Empfangseinheit, wenn das Senden/Übertragen eines Anteils von einer Sendeeinheit beendet ist, zu der Sendeeinheit eine Steueranweisung zum Anfordern von Senden/Übertragen eines weiteren Anteils der wenigstens einen Datei zu senden, wobei die Senden/Übertragen des einen weiteren Anteils von einer anderen Sendeeinheit begonnen hat.

5. Verfahren nach Patentanspruch 4, bei dem der Schritt, eine Steueranweisung für Anforderung zum Senden/übertragen eines weiteren Anteils zu senden/übertragen die Schritte einschließt:
zu bestimmen, für welchen Anteil derjenige größte Teil des Anteils übrig bleibt, der gesendet/übertragen werden soll,
von der Empfangseinheit Steueranweisungen für Anforderung von Senden/Übertragen des bestimmten Anteils zu senden/übertragen.

6. Verfahren nach Patentanspruch 5, bei dem der Schritt, eine Steueranweisung für Anforderung des Sendens/Übertragens des bestimmten Anteils zu senden/übertragen, den Schritt einschließt:
von der Empfangseinheit eine Steueranweisung für Anforderung von Senden/Übertragen nur eines Anteils des bestimmten Anteils zu senden, wobei dieser Anteil in dem Anteil des Anteil enthalten ist, der noch nicht gesendet/übertragen worden ist.

7. Verfahren nach einem der Patentansprüche 1 bis 6, das weiter den Schritt aufweist
in jeder der wenigstens zwei Sendeeinheiten als Reaktion auf eine Steueranweisung für Senden/Übertragen eines Anteils der wenigstens einen Datei den Anteil in einem Puffer unterzubringen, wobei der Anteil in dem Puffer an die Empfangseinheit über nur einen asynchronen Übertragungskanal gesendet/übertragen wird.

8. Verfahren nach einem der Patentansprüche 1 bis 6, bei dem der Schritt, jeden Anteil zu senden/übertragen, die Schritte einschließt, in jeder der wenigstens zwei Sendeeinheiten
jeden Anteil in Segmente aufzuteilen;
die Segmente jeweils in einen Datenteil eines Datenpakets zu packen,
die Datenpakete mit einem Kopfsatz zu versehen, der eine Anzahl von Identitätsbytes, die die Datei identifizieren, mit der das Datenpaket zusammenhängt, und eine Anzahl von Positionsbytes einschließt, die eine Position in der wenigstens einen Datei für das Segment anzeigen, das der Datenteil des Datenpakets einschließt,
die Datenpakete in einem Puffer unterzubringen, und
die Datenpakete in dem Puffer zu der Empfangseinheit über nur einen asynchronen Sendekanal zu senden/übertragen.

9. Verfahren nach Patentanspruch 8, bei dem der Positionsbyte eine Byteposition in der wenigstens einen Datei für einen ersten Byte des Segments einschließt, welches der Datenteil des Datenpakets einschließt.

10. Verfahren nach Patentanspruch 8 oder 9, bei dem der Kopfsatz weiter eine Anzahl von Typenbytes zum Anzeigen, dass der Datenteil des Datenpakets ein Segment einer Datei enthält, und eine Anzahl von Größenbytes zum Anzeigen der Größe des Datenteils des Datenpakets einschließt.

11. Verfahren nach Patentanspruch 10, das weiter den Schritt einschließt, von jeder der wenigstens zwei Sendeeinheiten für jede Datei jedes Anteils der wenigstens einen Datei ein Datenpaket zu senden/übertragen, das einen Kopfsatz und einen Datenteil einschließt, wobei der Kopfsatz eine Anzahl von Typenbytes, die anzeigen, dass der Datenteil des Datenpakets einen Namen einer Datei enthält, eine Anzahl von Größenbytes, die die Größe des Datenteils des Datenpakets anzeigen, und eine Anzahl von Identitätsbytes einschließt, die die Datei identifizieren, mit der das Datenpaket bezieht, und wobei der Datenteil den Namen der Datei einschließt, mit dem das Datenpaket zusammenhängt.

12. Verfahren nach Patentanspruch 10 oder 11, das weiter den Schritt einschließt:
von jeder der wenigstens zwei Sendeeinheiten für jede Datei jedes Anteils der wenigstens einen Datei ein Datenpaket zu senden/übertragen, das einem Kopfsatz und einen Datenteil enthält, wobei jeder Kopfsatz eine Anzahl von Typenbytes, die anzeigen, dass der Datenteil dieses Datenpakets eine Größe einer Datei einschließt, eine Anzahl von Größenbytes, die die Größe des Datenteils des Datenpakets anzeigen, und eine Anzahl von Identitätsbytes einschließt, die die Datei identifizieren, mit der das Datenpaket zusammenhängt, und wobei der Datenteil die Größe der Datei einschließt, mit der dieses Datenpaket zusammenhängt.

13. Verfahren nach Patentanspruch 10 oder 11, bei dem das letzte Segment jeder der Mehrzahl von Dateien in einem Datenpaket gesendet/übertragen wird, dessen Kopfsatz eine Typenbezeichnung einschließt, die anzeigt, dass der Datenteil des Datenpakets das letzte Segment einer Datei einschließt.

14. Verfahren nach einem der Patentansprüche 1 bis 13, bei dem der Schritt, Information zu senden/übertragen, die die Größe der wenigstens einen Datei betrifft, die Schritte einschließt:
in einer ersten Sendeeinheit Information, die die Größe die wenigstens einen Datei betrifft, in einen Datenteil eines Datenpakets zu packen,
das Datenpaket mit einem Kopfsatz zu versehen, der eine Anzahl von Identitätsbytes für Identifizierung der Datei einschließt, mit dem das Datenpaket zusammenhängt;
das Datenpaket von der Sendeeinheit zu der Empfangseinheit zu senden/übertragen.

15. Verfahren nach einem der Patentansprüche 7 bis 14, bei dem der Übertragungskanal eine TCP-Verbindung ist.

16. Computerprogramm, das Programmschritte einschließt, die die Schritte in einem Verfahren gemäß einem der Patentansprüche 1 bis 15 durchführen.

17. Computerlesbares Medium, das Anweisungen einschließt, die die Schritte in einem Verfahren gemäß einem der Patentansprüche 1 bis 15 ausführen.
